# EUROPÄISCHE PATENTSCHRIFT

(11) **EP 3 410 261 B1**
(45) Veröffentlichungstag und Bekanntmachung des Hinweises auf die Patenterteilung: **30.07.2025**
(21) Anmeldenummer: 18175579.4
(22) Anmeldetag: 01.06.2018
(51) Int. Cl.: G06F 3/01, G06F 3/03, G02B 27/01

(54) **VISUALISIERUNG EINER QUALITÄTSINFORMATION**
VISUALISATION OF QUALITY INFORMATION
VISUALISATION D'UNE INFORMATION QUALITATIVE

(30) Priorität: 01.06.2017 DE 102017005353
(43) Veröffentlichungstag der Anmeldung: 05.12.2018
(73) Patentinhaber: VDEh-Betriebsforschungsinstitut GmbH, 40237 Düsseldorf (DE)
(72) Erfinder: LINK, Norbert, 50733 Köln (DE); BRANDENBURGER, Jens, 47839 Krefeld (DE)
(74) Vertreter: Uexküll & Stolberg

(56) Entgegenhaltungen:
- EP-A1- 3 009 833
- US-A1- 2013 293 580
- US-A1- 2016 321 841

## Beschreibung

Die Erfindung betrifft ein Verfahren und eine Vorrichtung zur Darstellung einer Qualitätsinformation eines Objekts sowie eine Verwendung zur Darstellung einer Qualitätsinformation eines Objekts.

Bei der Fertigung bzw. Produktion von Objekten, insbesondere von Flachstahl, ist es bekannt, eine kontinuierliche Überwachung der Qualität durchzuführen. In sogenannten Inspektionsständen wird daher das gefertigte bzw. erzeugte Objekt, insbesondere das sogenannte Band bei der Flachstahlproduktion, von geschulten Beobachtern bzw. Anwendern inspiziert und bei Qualitätsproblemen (Defekten) entsprechend abgewertet. Es ist bekannt, dass die Anwender durch Inspektionssysteme unterstützt werden können, die in Echtzeit Qualitätsfehler erkennen und klassifizieren können.

EP 3 009 833 A1 offenbart eine In-Prozessfehlerüberprüfung durch erweiterte Realität. Es wird eine Anordnung zur optischen Fehlerüberprüfung von mindestens einem Bauteil während des Herstellungsprozesses des Bauteils beschrieben. Die Anordnung weist eine Fehlererkennungseinheit auf, mittels derer ermittelte Fehlerinformationen auf das Bauteil in Echtzeit überlappt und durch Hilfe einer Visualisierungseinheit dem Benutzer erkennbar gemacht werden kann. Dem Benutzer stehen sämtliche und alle notwendigen Fehlerinformationen in dem durch die Visualisierungseinheit angezeigten Bauteilbild in Echtzeit zur Verfügung.

US 2016/0321841 A1 offenbart ein erweitertes-Realitäts-System mit einer durchsichtigen Anzeige, sodass von einem Anwender ein Objekt real betrachtet werden kann.

US 2013/0293580 A1 offenbart ein System und ein Verfahren zum Auswählen von Zielen in einer erweiterten-Realitäts-Umgebung, bei dem eine durchsichtige Brille Anwendung findet.

Es hat sich gezeigt, dass der Blick des Anwenders auf das zu begutachtende Objekt im Hinblick auf eine Qualitätsinformation nicht durch eine vollautomatisierte Darstellung ersetzt werden kann, da durch die Umwandlung des Bauteils in ein Bauteilbild Informationen verloren gehen können, die nicht mehr für eine Beurteilung hinsichtlich der Qualitätsinformation zur Verfügung stehen können.

Aufgabe der vorliegenden Erfindung ist es daher, eine verbesserte Möglichkeit einer Beurteilung einer Qualität eines Objekts zu liefern.

Diese Aufgabe wird gemäß dem Gegenstand der nebengeordneten Patentansprüche gelöst. Vorteilhafte Ausführungsformen sind den Unteransprüchen und der Beschreibung zu entnehmen.

Die Erfindung geht von dem Grundgedanken aus, dass der Anwender zumindest teilweise in einer Blickrichtung und ohne den Kopf bewegen zu müssen, sowohl das reale Objekt als auch die von einem Inspektionssystem ermittelte, dem vom Anwender real betrachteten Teilbereich des Objekts zugeordnete Qualitätsinformation sieht. Der Grundgedanken sieht vor, dass kein ständiger Blickwechsel zwischen einer Anzeige und einem realen Objekt nötig ist. Qualitätsinformationen eines oder mehrerer Inspektionssysteme oder modellbasierte Qualitätsinformationen können mittels der Anzeige angezeigt werden, wobei festgestellt wird, was der Anwender real sieht, um die Qualitätsinformation an dem vom Anwender betrachteten, real zu sehenden Objektabschnitt anzupassen. Der Anwender kann ohne Änderung der Blickrichtung das reale Objekt zusammen mit der Qualitätsinformation, die dem real zu sehenden Objekt oder dem zu sehenden Teilbereich zugeordnet ist, sehen.

Die Erfindung schafft ein Verfahren zur Darstellung einer Qualitätsinformation eines Objekts. Bei dem Verfahren wird die Qualitätsinformation einem Anwender angezeigt. Eine Relativbewegung erfolgt zwischen Anzeige und Objekt. Der Anwender sieht zumindest einen Teilbereich des Objekts real und es wird festgestellt, was der Anwender real sieht. Die Qualitätsinformation wird an das angepasst, was der Anwender real sieht, so dass die Qualitätsinformation mittels der Anzeige unmittelbar an dem Objekt erscheinen kann. Hierdurch kann die Qualitätsinformation lagerichtig auf dem zu begutachtenden Objekt dargestellt werden und die Lage der Qualitätsinformation kontinuierlich durch eine Synchronisierung der Feststellung dessen, was der Anwender real sieht, korrigiert werden. Die Qualitätsinformation an der Anzeige kann relativ zum sich bewegenden Objekt konstant verbleiben.

Eine Synchronisierung der auf der Anzeige dargestellten Qualitätsinformation an den Teilbereich des Objekts, den der Anwender sieht, kann insbesondere mittels einer Steuereinrichtung erfolgen. Die Steuereinrichtung kann einen Computer, einen Mikroprozessor und/oder eine Befehle und/oder Daten verarbeitende Hardware aufweisen, der bzw. die die Signale eines Inspektionssystems verarbeiten kann, um diese mittels der Anzeige darstellen zu können. Die Steuereinrichtung kann mit der Anzeige kabellos oder kabelgebunden verbunden sein. Die Steuereinrichtung kann mittelbar oder unmittelbar mit einem Inspektionssystem, welches automatisch eine Qualitätsinformation ermittelt, verbunden sein, wobei die Verbindung zwischen der Steuereinrichtung und dem Inspektionssystem kabellos oder kabelgebunden sein kann. Bei dem Inspektionssystem kann es sich insbesondere um ein System handeln, welches optisch eine Qualitätsinformation ermittelt. Bei einem sich bewegenden Objekt kann der Steuereinrichtung mittels einer Eingabe oder einer mittelbar oder unmittelbar von der Steuereinrichtung erfassten Messgröße die Geschwindigkeit und/oder die Bewegungsdaten des Objekts mitgeteilt werden. Insbesondere bei einer stationär zum Objekt angeordneten Anzeige kann die Synchronisierung mittels einer Geschwindigkeit des Objekts einfach erfolgen.

Mittels der Steuereinrichtung kann eine Synchronisierung der Anzeige und dem Teilbereich des Objekts, das der Anwender sieht, erzeugt werden.

Im Sinne der Beschreibung umfasst der Begriff "Qualitätsinformation" alle Informationen, die eindeutig einer Position auf dem Objekt zugeordnet und somit visualisiert werden können, wie sowohl sichtbare Defekte, wie beispielsweise Planheitsabweichungen, Oberflächenrauigkeiten, Risse, lochartige Fehlstellen, Auffälligkeiten in Textur, Farbe oder Glanz, als auch Modellergebnisse.

Die vorstehende Beschreibung für den Begriff "Qualitätsinformation" offenbart, dass eine "Qualitätsinformation" mehr als ein einzelner Messwert sein kann. Eine Qualitätsinformation kann beispielsweise auch von einem oder von mehreren Mess- und/oder Inspektionssystemen für die Position ermittelte Daten umfassen, wobei die Daten auch zu einer neuen, modellbasierten Qualitätsinformation zusammengeführt sein können, was vorstehend als Modellergebnis beschrieben ist. Der Begriff "Qualitätsinformation" kann neben einer Beschreibung der Qualität einer Position auf dem Objekt auch eine Information umfassen oder sein, die Hinweise oder Rückschlüsse auf die Anlage liefert, mit der das Objekt prozessiert wird. Beispielsweise können periodisch auf dem Objekt auftretende Fehler auf einen Fehler oder eine Beschädigung in einem Prozessschritt beim Prozessieren des Objekts, beispielsweise beim Walzen mittels einer beschädigten Walze, Rückschlüsse ermöglichen. Die Qualitätsinformation lässt damit Rückschlüsse darauf zu, dass die Anlage im Bearbeitungsschritt, insbesondere hinsichtlich einer Walze, defekt sein kann. Auch können bei der Prozessierung beispielsweise Prozessgeschwindigkeiten, insbesondere die Objektgeschwindigkeit, angepasst werden, wenn kritische Beschädigungen des Objekts beobachtet werden. Ferner kann die Qualitätsinformation beinhalten oder sein, dass damit eine Information vorliegt, ob ein Fehler aufgrund des letzten - unmittelbar vor der Beobachtung bzw. Inspektion des Objekts durchgeführten - Prozessschritts zu einer bestimmten Qualität bzw. einem Defekt geführt hat oder, ob das Objekt an der entsprechenden Position schon vor dem letzten Prozessschritt eine entsprechende Qualität aufgewiesen hat.

Der Begriff "Qualitätsinformation" umfasst damit nicht nur jegliche Information zu einer Position auf dem Objekt hinsichtlich einer Eigenschaft dieser Position, sondern auch Tupel oder Kombinationen von Informationen. Mit der Qualitätsinformation kann teilweise oder vollständig, ein Rückschluss auf eventuelle Defekte an einer einen Prozessierungschritt am Objekt durchführenden Anlage geschlossen werden. Die Qualitätsinformation kann vorverarbeitet, zusammengefasst, nachbearbeitet und/oder weiterverarbeitet werden, sodass die Qualitätsinformation veränderte und/oder kombinierte Informationen eines Anwenders und/oder eines oder mehrerer Mess- und Inspektionssysteme sein kann. Die Qualitätsinformation kann insbesondere eine oder mehrere alphanumerische Zeichenketten umfassen.

Ein "Objekt" im Sinne der Beschreibung umfasst jegliche Art eines zu produzierenden bzw. erzeugenden Produkts, insbesondere bewegte Objekte, die beispielsweise auch durch oder bei ihrer Herstellung eine Bewegung erfahren. Ein Objekt kann insbesondere bahnförmig sein, wie es beispielsweise bei der Produktion von Bahnen aus Metall, Papier, Karton, Folie, Textil und/oder Gewebe auftritt. Das Objekt kann einen, insbesondere einen flächenförmigen Körper aufweisen. Beispielsweise kann das Objekt ein Blech, insbesondere ein Metallblech, ganz besonders bevorzugt ein Stahlblech sein. Das Objekt kann auch ein bei der Herstellung bewegter, insbesondere gewalzter oder umgeformter Körper sein, insbesondere eine Stahlbramme, ein Stahlknüppel oder ein Stahlträger.

Der Begriff "Relativbewegung" im Sinne der Beschreibung umfasst insbesondere eine Bewegung, die zwischen der Anzeige und dem Objekt erfolgt. Die Anzeige kann von einem Anwender getragen werden, der die Anzeige, insbesondere in Blickrichtung auf das Objekt, halten bzw. tragen kann, insbesondere in Form einer Brille. Die Anzeige kann eine fixierte Anzeige zum sich bewegenden Objekt sein, wobei insbesondere eine Fixierung an einem Gerät, welches einer Bewegung des Objekts zugeordnet ist, vorliegen kann. Die Anzeige kann als ein Monitor oder Bildschirm an einem Inspektionsstand über dem zu inspizierenden Objekt angeordnet sein. Die Anzeige kann auch eine Projektion sein, die in der Blickrichtung am zu inspizierenden Objekt erfolgt. Unter einer Anzeige wird auch im Sinne der Beschreibung ein Head-Up-Display verstanden, welches an dem, insbesondere sich bewegenden, Objekt angeordnet ist.

Der Begriff "Relativbewegung zwischen Anzeige und Objekt" umfasst im Sinne der Beschreibung jedwede Form der Bewegung zwischen Anzeige und Objekt, wobei insbesondere, wenn das Objekt bewegt wird, die Anzeige im Wesentlichen zum Anwender in Ruhe verbleiben kann.

Sofern darauf abgestellt wird, dass festgestellt wird, was der Anwender real sieht, so wird im Sinne der Beschreibung darunter verstanden, dass ermittelt werden kann, was in der Nähe bzw. benachbart zum Anwender dem Anwender für eine Beobachtung bzw. Inspizierung sichtbar zur Verfügung steht. Mittels einer im Wesentlichen einfachen Synchronisierung der Bahngeschwindigkeit mit der Anzeige kann eine Anpassung der Qualitätsinformation, die mittels der Anzeige angezeigt werden kann, erfolgen und dem real zu sehenden Objekt bzw. einem Teilabschnitt des zu sehenden Objekts kann die Qualitätsinformation zugeordnet werden.

Gemäß der vorliegenden Erfindung wird eine Eingabe des Anwenders erfasst, die als Qualitätsinformation dem real betrachteten Teilbereich des Objekts zugeordnet wird. Hierdurch kann der Anwender schon bei der Herstellung bzw. Erzeugung des Objekts mittels der Eingabe eine Qualitätsinformation dem real betrachteten Teilbereich des Objekts zuordnen. Die Qualitätsinformation kann protokolliert werden.

In einer bevorzugten Ausführungsform wird die Eingabe des Anwenders, die als Qualitätsinformation dem real betrachteten Teilbereich des Objekts zugeordnet werden kann, mittels einer Tracking-Sensorik vorgenommen. Bei der Sensorik kann es sich um einen optischen, magnetischen, elektrischen oder mechanischen Sensor handeln, mit dem eine Position, Lage und/oder Bewegung des Anwenders erfasst werden kann. Die Erkennung kann beispielsweise durch am Anwender befestigte Sensoren, wie Kreiselsensoren oder durch eine oder mehrere auf den Anwender gerichtete Kameras (optisches Tracking) erfolgen. Insbesondere kann die Sensorik die Bewegung des Kopfes, eines Armes, einer Hand und/oder eines Auges des Anwenders erkennen.

In einer bevorzugten Ausführungsform wird die Eingabe des Anwenders, die als Qualitätsinformation dem Realbetrachter im Teilbereich des Objekts zugeordnet werden kann, mittels einer akustischen Eingabe vorgenommen. Hierzu kann eine akustische Sensorik verwendet werden. Die akustische Sensorik kann an ein System zur Spracherkennung und Sprachsteuerung angeschlossen sein. Bei der akustischen Sensorik kann es sich um einen Schallwandler, insbesondere ein Mikrophon, handeln, wie es aus dem Stand der Technik bekannt ist. Mittels des an die akustische Sensorik angeschlossenen Systems zur Spracherkennung und Sprachsteuerung kann der Anwender Eingaben vornehmen, wie diese prinzipiell auf anderem Gebiet bekannt sind.

In einer bevorzugten Ausführungsform wird mittels der Eingabe des Anwenders die angezeigte Qualitätsinformation bestätigt, verneint und/oder verändert. Hierdurch kann eine besonders effektive Qualitätssicherung erfolgen, da dem Anwender die Qualitätsinformation eines oder mehrerer Inspektionssysteme zur Verfügung gestellt wird, wobei die Anzeige lagegenau erfolgen kann. Der Anwender kann nun seinerseits anhand der realen Betrachtung des Objekts die Qualitätsinformation, die lagegenau erfolgt, verifizieren oder falsifizieren.

Gemäß der vorliegenden Erfindung kann mittels der Eingabe eine neue Qualitätsinformation dem Objekt hinzugefügt oder das Objekt oder Teilbereiche des Objekts bewertet werden. Bei der neuen Qualitätsinformation kann es sich um eine zusätzliche Qualitätsinformation handeln, die dem Anwender nicht angezeigt wurde. Mittels der neuen Qualitätsinformation kann auch auf einen Zustand des Objekts oder eines Teilbereichs des Objekts reagiert werden, der dem Anwender nicht angezeigt wird. Mittels der Eingabe kann auf einen Zustand des Objekts bzw. eines Teilbereichs des Objekts flexibel reagiert werden, obwohl die Qualitätsinformation dem Anwender nicht angezeigt wird. Die Erfahrung des Anwenders bei der Betrachtung des Objekts wird berücksichtigt, indem dieser in der Eingabe und Bewertung des Objekts oder Teilbereichs des Objekts und im Hinzufügen von Qualitätsinformationen frei ist.

Die Erfindung schafft auch eine Vorrichtung zur Darstellung einer Qualitätsinformation eines Objekts, wobei die Vorrichtung eine Anzeige aufweist, die eine Relativbewegung zwischen Objekt und Anzeige zulässt. Auf der Anzeige ist die Qualitätsinformation einem Anwender anzeigbar. Die Anzeige ist für eine reale Erfassung zumindest eines Teilbereichs des Objekts angepasst. Die Anpassung erfolgt insbesondere derart, dass dem Anwender eine Möglichkeit gegeben ist, ohne Änderung des Blickwinkels real das Objekt zu erfassen. Es ist zudem eine Steuereinrichtung vorgesehen, die in Abhängigkeit dessen, was der Anwender real sieht, ausgestaltet ist, eine zugehörige Qualitätsinformation darzustellen. Die Formulierung "in Abhängigkeit dessen, was der Anwender real sieht" ist dabei derart zu verstehen, dass eine ortsnahe und lageabhängige Anzeige am Objekt selbst erfolgt, wobei dem Anwender der Blick auf die Anzeige und das Objekt selbst möglich ist.

In einer bevorzugten Ausführungsform ist eine Tracking-Sensorik vorhanden, mit der eine Eingabe einer Qualitätsinformation erfolgen kann. Die Steuereinrichtung ist ausgestaltet, die Qualitätsinformation dem real angesehenen Teilbereich zuzuordnen. Hierdurch kann eine einfache Möglichkeit geschaffen werden, dem Anwender eine Eingabe zu ermöglichen, ohne den Blick von dem zu inspizierenden Objekt und der dem zu inspizierenden Objekt zugeordneten Qualitätsinformation auf der Anzeige nehmen zu müssen. Eine Tracking-Sensorik bietet dabei eine Möglichkeit, variabel Dinge durch den Anwender eingeben zu lassen. Der Anwender kann auch neue Qualitätsinformationen erzeugen und dem Objekt lagerichtig zuordnen oder das Objekt oder Teilbereiche des Objekts bewerten.

Gemäß der vorliegenden Erfindung ist eine Speichereinrichtung für eine ortsabhängige Zuordnung von Qualitätsinformation des Objekts vorgesehen. Hierdurch kann eine Zuordnung der Qualität in Abhängigkeit vom realen Objekt erfolgen, so dass beispielsweise ein Teilbereich des Objekts verworfen werden kann, wohingegen ein anderer Bereich als Bereich hoher Güte identifiziert werden kann.

Die Erfindung schafft auch eine Verwendung zur Darstellung einer Qualitätsinformation eines Objekts mittels einer eine Relativbewegung zwischen Objekt und Anzeige zulassenden Anzeige, wobei als Anzeige eine zumindest einen Blick auf das Objekt freigebende und gleichbedeutend "freilassende" Anzeige verwendet wird. Die Lage des Objekts im Raum zur Anzeige wird erfasst und für eine Zuordnung der Qualitätsinformation verwendet.

Die Ausführungen in der Beschreibung zu den Aspekten des Verfahrens, der Vorrichtung und der Verwendung sind als ergänzend zueinander zu sehen. Einzelne Teilaspekte des Verfahrens können für die Vorrichtung und/oder die Verwendung verwendet werden. Die einzelnen Teilaspekte des Verfahrens, der Vorrichtung und der Verwendung schließen sich nicht aus.

Die Erfindung wird nachfolgend anhand von Zeichnungen, die Ausführungsformen der Erfindung zeigen, näher erläutert.

Darin zeigen:
- Fig. 1: eine erfindungsgemäße Vorrichtung in stark schematischer Darstellung;
- Fig.2: eine erfindungsgemäße Vorrichtung gemäß einem weiteren Ausführungsbeispiel; und
- Fig. 3: eine erfindungsgemäße Vorrichtung in einer noch weiteren Ausführungsform.

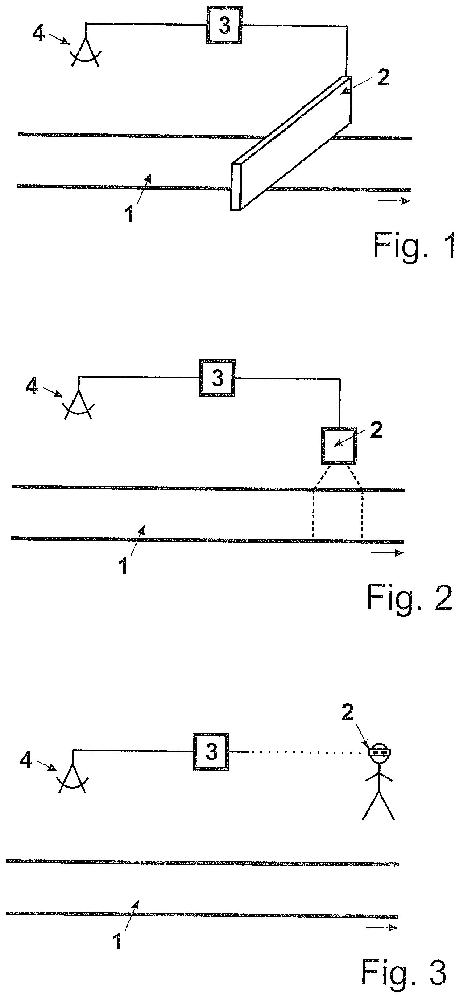

Fig. 1 zeigt eine Vorrichtung zur Darstellung einer Qualitätsinformation eines Objekts 1. Die Vorrichtung weist eine Anzeige 2 auf. In dem in der Fig. 1 dargestellten Ausführungsbeispiel ist das Objekt 1 als ein zu inspizierendes Band dargestellt, bei dem das Objekt 1 eine Bewegung gegenüber der stationären Anzeige 2 zulässt. Die Anzeige 2 ist im Wesentlichen stationär zu einem Inspektionsstand, der rechts von der Anzeige 2 in Fig. 1 befindlich ist, angeordnet und das Objekt 1 kann sich unter der Anzeige 2 in der durch den Pfeil gezeigten Richtung fortbewegen. Auf der Anzeige 2 ist einem Anwender eine Qualitätsinformation anzeigbar, wie sie beispielsweise als eine Oberflächenrauigkeit vorliegen kann. Die Qualitätsinformation wird von einem dem Inspektionsstand vorgeschalteten Inspektionssystem 4 ermittelt. Die Anzeige 2 ist derart angeordnet, dass die Anzeige 2 für eine reale Erfassung zumindest eines Teilbereichs des Objekts 1 angepasst ist. Eine Steuereinrichtung 3 der Vorrichtung, die mit der Anzeige 2 verbunden ist, ist ausgestaltet, in Abhängigkeit dessen, was der Anwender real an der Anzeige 2 sieht, die zugehörige Qualitätsinformation dazustellen. Bewegt sich das Objekt 1, so ändert sich die Anzeige 2, so dass die Qualitätsinformation lagerichtig zu dem darunter angeordneten, inspizierten Objekt 1 dargestellt wird. Die Lage der Qualitätsinformation verändert sich mit der Bewegung des Objekts 1. Beispielsweise kann bei dem als Band dargestellten Objekt 1 eine Synchronisierung mit der Bewegung des Bands mittels der Steuereinrichtung 3 erreicht werden, so dass die Lage der Qualitätsinformation relativ zum sich bewegenden Objekt 1 konstant bleibt.

Die Fig. 2 zeigt in einer stark schematischen Darstellung eine Projektion der Qualitätsinformation auf das reale Objekt 1. Die Anzeige 2 ist im Ausführungsbeispiel der Fig. 2 damit im Wesentlichen ein Projektor, der mit der Steuereinrichtung 3 verbunden ist.

Im in der Fig. 3 stark schematisch dargestellten Ausführungsbeispiel ist die Anzeige 2 als brillenähnliche Einrichtung ausgestaltet, so dass dem Anwender zwar der Blick auf das Objekt 1 ermöglicht wird, aber durch die brillenähnliche Anzeige 2 zudem eine Qualitätsinformation angezeigt wird. Durch die Feststellung der Lage der als Brille ausgestalteten Anzeige 2 ist die lagegenaue und positionsgenaue Darstellung der Qualitätsinformation am realen Objekt 1 möglich. Bei dem in Fig. 3 gezeigten Ausführungsbeispiel ist die Verbindung zwischen der Steuereinrichtung 3 und der Anzeige 2 kabellos mittels einer geeigneten Funktechnik.

## Patentansprüche

1. Verfahren durchgeführt von einer Vorrichtung zur Darstellung einer Qualitätsinformation eines sich bei der Herstellung bewegenden bahnförmigen Objekts (1),
- wobei die Qualitätsinformation eine Beschreibung der Qualität einer Position auf dem Objekt umfasst und
- wobei die Vorrichtung eine Anzeige (2) aufweist, die eine Relativbewegung zwischen Objekt (1) und Anzeige (2), die als vom Anwender gehaltene oder getragene Anzeige oder als zum sich bewegenden Objekt fixierte Anzeige ausgestaltet ist, zulässt, und
- wobei einem Anwender auf der Anzeige die Qualitätsinformation angezeigt wird,
**dadurch gekennzeichnet, dass**
- der Anwender ohne Änderung der Blickrichtung das reale Objekt zusammen mit der Qualitätsinformation, die dem real zu sehenden Objekt oder dem zumindest zu sehenden Teilbereich zugeordnet ist, sehen kann, und
- in Abhängigkeit dessen , was der Anwender real sieht, wird durch eine Steuereinrichtung (3) der Vorrichtung, eine zugehörige Qualitätsinformation dargestellt, wobei die zugehörige Qualitätsinformation mittels der Anzeige unmittelbar an dem Objekt dargestellt wird, wobei die Lage des Objekts im Raum zur Anzeige erfasst wird und für eine Zuordnung der Qualitätsinformation verwendet wird und wobei die Lage der Qualitätsinformation kontinuierlich durch eine Synchronisierung korrigiert wird, und
- wobei eine Eingabe des Anwenders von einer Sensorik der Vorrichtung erfasst wird, die als Qualitätsinformation dem real betrachteten Teilbereich des Objekts (1) zugeordnet wird, wobei mittels der Eingabe eine neue Qualitätsinformation dem Objekt (1) hinzugefügt, und
- wobei die Vorrichtung eine Speichereinrichtung für eine ortsabhängige Zuordnung von Qualitätsinformation am Objekt (1) aufweist, und wobei die neue Qualitätsinformation eine zusätzliche Qualitätsinformation ist, die dem Anwender nicht angezeigt wurde.

2. Verfahren nach Anspruch 1, **dadurch gekennzeichnet, dass** die Eingabe mittels einer Tracking-Sensorik vorgenommen wird.

3. Verfahren nach Anspruch 1, **dadurch gekennzeichnet, dass** die Eingabe akustisch vorgenommen wird.

4. Verfahren nach einem der Ansprüche 1 bis 3, **dadurch gekennzeichnet, dass** die Eingabe die angezeigte Qualitätsinformation bestätigt, verneint und/oder verändert.

5. Verfahren nach einem der Ansprüche 1 bis 4, **dadurch gekennzeichnet, dass** die Qualitätsinformation auch Information umfasst oder ist, die Hinweise oder Rückschlüsse auf die Anlage liefert, mit der das Objekt (1) prozessiert wird.

6. Vorrichtung zur Darstellung einer Qualitätsinformation eines sich bei der Herstellung bewegenden bahnförmigen Objekts (1),
- wobei die Qualitätsinformation eine Beschreibung der Qualität einer Position auf dem Objekt umfasst und
- die Vorrichtung eine Anzeige (2) aufweist, die eine Relativbewegung zwischen Objekt (1) und Anzeige (2), die als vom Anwender gehaltene oder getragene Anzeige oder als zum sich bewegenden Objekt fixierte Anzeige ausgestaltet ist, zulässt, und auf der die Qualitätsinformation einem Anwender anzeigbar ist,
**dadurch gekennzeichnet, dass**
der Anwender ohne Änderung der Blickrichtung das reale Objekt zusammen mit der Qualitätsinformation, die dem real zu sehenden Objekt oder dem zumindest zu sehenden Teilbereich zugeordnet ist, sehen kann und
- die Vorrichtung eine Steuereinrichtung (3) aufweist, die ausgestaltet ist, in Abhängigkeit dessen, was der Anwender real sieht, eine zugehörige Qualitätsinformation darzustellen, wobei die zugehörigen Qualitätsinformation mittels der Anzeige unmittelbar an dem Objekt dargestellt wird ,
- wobei die Lage des Objekts im Raum zur Anzeige erfasst wird und für eine Zuordnung der Qualitätsinformation verwendet wird und,
- wobei die Lage der zugehörigen Qualitätsinformation kontinuierlich durch eine Synchronisierung korrigiert wird, und
- eine Eingabe des Anwenders von einer Sensorik der Vorrichtung erfasst wird, die als Qualitätsinformation dem real betrachteten Teilbereich des Objekts (1) zugeordnet wird,
- wobei mittels der Eingabe eine neue Qualitätsinformation dem Objekt (1) hinzugefügt wird und
- die Vorrichtung eine Speichereinrichtung für eine ortsabhängige Zuordnung von Qualitätsinformation am Objekt (1) aufweist, wobei die neue Qualitätsinformation eine zusätzliche Qualitätsinformation ist, die dem Anwender nicht gezeigt wurde.

7. Vorrichtung nach Anspruch 6, **dadurch gekennzeichnet, dass** die Sensorik eine Tracking-Sensorik ist, mit der die Eingabe der neuen Qualitätsinformation erfolgen kann.

8. Vorrichtung nach Anspruch 6, wobei das bahnförmige Objekt Bahnen aus Metall, Papier, Karton, Folie, Textil und/oder Gewebe umfassen kann, die durch oder bei ihrer Herstellung eine Bewegung erfahren.

## Claims

1. Method carried out by a device for representing quality information of a web-shaped object (1) moving during manufacture,
- wherein the quality information comprises a description of the quality of a position on the object, and
- wherein the device comprises a display (2) which permits a relative movement between object (1) and display (2), the display (2) being designed as a display held or carried by the user or as a display which is fixed relative to the moving object, and
- wherein the quality information is displayed to a user on the display,
**characterized in that**
- the user can see the real object together with the quality information which is assigned to the real object to be seen or to the at least partial area to be seen without changing the viewing direction, and
- depending on what the user actually sees, an associated quality information is displayed by a control device (3) of the device, wherein the associated quality information is displayed directly on the object by means of the display, wherein the position of the object in space relative to the display is detected and is used for an assignment of the quality information, and wherein the position of the quality information is continuously corrected by synchronization, and
- wherein an input of the user is detected by a sensor system of the device, the input being assigned as quality information to the real viewed partial area of the object (1), wherein a new quality information is added to the object (1) by means of the input, and
- wherein the device has a memory device for a location-dependent assignment of quality information to the object (1), and wherein the new quality information is an additional quality information which was not displayed to the user.

2. Method according to claim 1, **characterized in that** the input is made by means of a tracking sensor system.

3. Method according to claim 1, **characterized in that** the input is made acoustically.

4. Method according to any one of claims 1 to 3, **characterized in that** the input confirms, denies and/or changes the displayed quality information.

5. Method according to any one of claims 1 to 4, **characterized in that** the quality information also comprises or is information that provides indications or conclusions about the equipment with which the object (1) is processed.

6. Device for displaying quality information of a web-shaped object (1) moving during manufacture,
- wherein the quality information comprises a description of the quality of a position on the object and
- the device has a display (2) which permits a relative movement between object (1) and display (2), the display (2) being designed as a display held or carried by the user or as a display which is fixed relative to the moving object, and on which the quality information can be displayed to a user,
**characterized in that**
the user can see the real object together with the quality information, which is assigned to the real object to be seen or to the at least partial area to be seen, without changing the viewing direction, and
- the device has a control device (3) which is designed to display an associated quality information as a function of what the user actually sees, the associated quality information being displayed directly on the object by means of the display,
- wherein the position of the object in space relative to the display is detected and is used for an assignment of the quality information and,
- wherein the position of the associated quality information is continuously corrected by synchronization, and
- an input of the user is detected by a sensor system of the device, the input being assigned as quality information to the real observed partial area of the object (1),
- wherein a new quality information is added to the object (1) by means of the input, and
- the device has a memory device for a location-dependent assignment of quality information to the object (1), wherein the new quality information is an additional quality information which was not displayed to the user.

7. Device according to claim 6, **characterized in that** the sensor system is a tracking sensor system with which the new quality information can be entered.

8. Device according to claim 6, wherein the web-like object may comprise webs of metal, paper, cardboard, foil, textile and/or fabric which undergo movement by or during their manufacture.

## Revendications

1. Procédé mis en œuvre par un dispositif de visualisation d'une information qualitative d'un objet (1) en forme de bande qui se déplace lors de la fabrication,
- l'information qualitative comprenant une description de la qualité d'une position sur l'objet, et
- le dispositif présentant un moyen d'affichage (2) qui permet un mouvement relatif entre l'objet (1) et le moyen d'affichage (2), lequel est réalisé sous forme de moyen d'affichage tenu ou porté par l'utilisateur ou de moyen d'affichage fixe par rapport à l'objet en mouvement, et
- l'information qualitative étant visualisée sur le moyen d'affichage pour un utilisateur,
**caractérisé en ce que**
- sans modifier la direction du regard, l'utilisateur peut voir l'objet réel, conjointement avec l'information qualitative qui est associée à l'objet réellement visible ou à la zone partielle au moins visible, et
- en fonction de ce que l'utilisateur voit réellement, un dispositif de commande (3) du dispositif représente une information qualitative associée, l'information qualitative associée étant visualisée à l'aide du moyen d'affichage, directement sur l'objet, la position de l'objet dans l'espace étant détectée en vue de l'affichage et étant utilisée en vue d'une association de l'information qualitative, et la position de l'information qualitative étant corrigée en continu par une synchronisation, et
- une saisie de l'utilisateur étant détectée par un système de capteur du dispositif, la saisie étant associée en tant qu'information qualitative à la zone partielle réellement observée de l'objet (1), une nouvelle information qualitative étant ajoutée à l'objet (1) par le biais de la saisie, et
- le dispositif présentant un dispositif de mémoire pour une association, en fonction du lieu, d'une information qualitative sur l'objet (1), et la nouvelle information qualitative étant une information qualitative supplémentaire qui n'a pas été affichée pour l'utilisateur.

2. Procédé selon la revendication 1, **caractérisé en ce que** la saisie est effectuée au moyen d'un système de capteur de poursuite.

3. Procédé selon la revendication 1, **caractérisé en ce que** la saisie est effectuée par voie acoustique.

4. Procédé selon une des revendications 1 à 3, **caractérisé en ce que** la saisie confirme, infirme et/ou modifie l'information qualitative affichée.

5. Procédé selon une des revendications 1 à 4, **caractérisé en ce que** l'information qualitative comprend ou constitue également une information qui fournit des déductions concernant l'installation avec laquelle l'objet (1) est traité.

6. Dispositif de visualisation d'une information qualitative d'un objet (1) en forme de bande qui se déplace lors de la fabrication,
- dans lequel l'information qualitative comprend une description de la qualité d'une position sur l'objet, et
- le dispositif présente un moyen d'affichage (2) qui permet un mouvement relatif entre l'objet (1) et le moyen d'affichage (2), lequel est réalisé sous forme de moyen d'affichage tenu ou porté par l'utilisateur ou de moyen d'affichage fixe par rapport à l'objet en mouvement, et sur lequel l'information qualitative peut être visualisée sur le moyen d'affichage pour un utilisateur,
**caractérisé en ce que**
sans modifier la direction du regard, l'utilisateur peut voir l'objet réel, conjointement avec l'information qualitative qui est associée à l'objet réellement visible ou à la zone partielle au moins visible, et
- le dispositif présente un dispositif de commande (3) qui est conçu pour représenter une information qualitative associée, en fonction de ce l'utilisateur voit réellement, l'information qualitative associée étant représentée à l'aide du moyen d'affichage, directement sur l'objet,
- la position de l'objet dans l'espace étant détectée en vue de la visualisation et étant utilisée en vue d'une association de l'information qualitative, et
- la position de l'information qualitative étant corrigée en continu par une synchronisation, et
- une saisie de l'utilisateur étant détectée par un système de capteur du dispositif, laquelle saisie est associée en tant qu'information qualitative à la zone partielle réellement observée de l'objet (1),
- une nouvelle information qualitative étant ajoutée à l'objet (1) par le biais de la saisie, et
- le dispositif présentant un dispositif de mémoire pour une association, en fonction du lieu, d'une information qualitative sur l'objet (1), la nouvelle information qualitative étant une information qualitative supplémentaire qui n'a pas été visualisée pour l'utilisateur.

7. Dispositif selon la revendication 6, **caractérisé en ce que** le système de capteur est un système de capteur de poursuite qui permet la saisie de la nouvelle information qualitative.

8. Dispositif selon la revendication 6, dans lequel l'objet en forme de bande peut comprendre des bandes en métal, papier, carton, film, textile et/ou tissu, qui sont soumises à un mouvement du fait de leur fabrication ou au cours de celle-ci.
